# EUROPEAN PATENT SPECIFICATION

(11) **EP 0 825 921 B1**
(45) Date of publication and mention of the grant of the patent: **28.04.1999**
(21) Application number: 96915085.3
(22) Date of filing: 13.05.1996
(51) Int. Cl.: B29C 63/34, C08J 3/24, C08K 9/10

(54) **METHODS OF MANUFACTURING TUBULAR STRUCTURES AND TUBULAR STRUCTURES MANUFACTURED BY THE METHODS**
VERFAHREN ZUR HERSTELLUNG VON ROHRFÖRMIGEN STRUKTUREN UND SO HERGESTELLTE ROHRFÖRMIGE STRUKTUREN
PROCEDES DE FABRICATION DE STRUCTURES TUBULAIRES ET STRUCTURES TUBULAIRES OBTENUES SELON LESDITS PROCEDES

(30) Priority: 18.05.1995 GB 9510019; 21.06.1995 GB 9512646; 26.09.1995 GB 9519575; 06.11.1995 GB 9522689; 08.11.1995 GB 9522861; 08.11.1995 GB 9522862; 11.11.1995 GB 9523123; 25.11.1995 GB 9524148; 03.04.1996 GB 9607045
(43) Date of publication of application: 04.03.1998
(73) Proprietor: SOUND PIPE LIMITED, Grand Turk (TC)
(72) Inventor: CHANDLER, Brian, A-8933 Steiermark (AT); BATES, Darren, Miles, Stoke-on-Trent ST9 9BG (GB); MURRAY, John, Edward, Leicester LE5 6NJ (GB); OLIVER, Peter, Cotterill, Brixworth, Northampton NN6 9BH (GB)
(74) Representative: Denmark, James
(86) International application number: GB9601133
(87) International publication number: WO9636476

(56) References cited:
- EP-A- 0 123 917
- WO-A-93/15131
- WO-A-95/01861

## Description

This invention relates to methods of manufacturing tubular structures and to tubular structures.

In particular, the invention relates to the manufacture of those tubular structures which are for use in what are called "cured in place" lining processes wherein the tubular structure is of a type comprising or embodying a curable synthetic resin matrix so that the structure has flexible, a foldable state, herein called the uncured state, as long as the resin remains uncured, and a rigid, hard state, herein called the cured state, after the resin has cured. The structure in the uncured state is caused to line a pipeline or passageway (herein called a passageway for convenience), especially an underground passageway, by the use of a liquid or gas to inflate the structure against the passageway surface, and when it is in this position, the resin matrix is cured to cause the structure to change from its flexible state to the rigid state, forming a hard lining on the passageway surface effectively repairing or rehabilitating same.

For ease of description, hereinafter and in the appended claims, the structure in the uncured state will be referred to as the lining and the cured structure will be referred to as the lining pipe, but it should be noted that the lining can be used simply to form a pipe or pipeline, by being inflated and cured (as opposed to be used for lining a passageway).

A thermosetting resin matrix as is well known is in the uncured state in a viscous phase, but progressively it changes to the cured state. This change may take place naturally, and in the majority of cases will take place naturally with the passage of time. Some resin matrixes cure quicker naturally than others, or the changing phase may take place as a result of the application of some forcing influence on the initial resin matrix. Such forcing influence may be for example the application of heat.

Thermosetting resin matrixes comprise a base resin and a catalyst (or hardener) mixed into the basic resin, and/or an accelerator. The catalyst is usually employed to start the cure or cause the cure, whilst the accelerator is usually embodied to accelerate the cure once it has started. All of the above is extensively well known, and is given herein simply by way of background to the reader.

The basic material of the resin matrix can be any suitable from a wide range of known resin matrixes such as polyester, epoxy or phenolic matrixes. Appropriate catalysts and/or accelerators for these materials are also well known, and other than the reference to specific examples, it is not the subject matter of this invention as to the specific resins, catalysts and accelerators.

We are particularly interested in the use of resinous materials in the formation of rigid lining pipes. Examples of "cured in place" lining processes, as widely practised throughout the world, especially in underground sewer pipes, are set forth in US Patent 4009063 and US Patent 4064211. In each of these patents, use is made of a carrier material for the resin matrix, such carrier material being typically a polyester felt which is impregnated with the resin matrix to form the resin matrix layer. In the case of the earlier US patent, the lining is simply pulled into the pipeline or passageway and then inflated, the resin matrix layer being surrounded on opposite sides by resin retaining film layers, whilst in the later US patent the lining is arranged so that the resin matrix layer is inside an outer film or coating, and is applied to the passageway surface by being everted into and along the passageway. The first method is known as the pull in and inflate method, whilst the second method is known as the eversion method.

As has been identified in certain prior patent applications filed by us, for example International Patent Application PCT/GB93/00107, demands have been placed upon resin matrix performance so that the resin will remain in the uncured state for a long time after impregnation of the carrier, but can be "triggered" when selected by the installer to give a fast cure. Such a resin matrix has been identified as a "latent" system insofar as linings can be prepared and then stored, and used at a later date at will. This is not possible with the currently practised methods which require that the lining be used within a pre-set short period after the impregnation step has taken place.

In the said various patent applications which have been filed, we have addressed the problem of providing a latent resin matrix, and various proposals have been made including the following.
1. The encapsulation of catalyst/accelerator in microcapsules which can be selectively ruptured when the resin matrix is to be cured.
2. The embodiment of the catalyst/accelerator in absorbent particles which again require to be ruptured when the resin matrix is to be cured.

In each of these cases, the selective rupturing of the capsules and/or particles causes release of the catalyst/accelerator into the base resin and the curing of the resin matrix.

It is also provided that ferromagnetic particles may be included in the resin matrix and may be activated to heat same to initiate cure, and these particles may be used in conjunction with the capsules and particles referred to above.

The felt materials which have been used in the prior art systems constitute a large fraction of the cost of the impregnated lining, and secondly the felt material is rather difficult to impregnate with the resin matrix which is fairly viscous and steps must be taken to extract air from the felt material whilst impregnation is taking place. Furthermore, in manufacturing the prior art linings, the felt material has to be fabricated into tubular form, and the entire lining has to be produced before impregnation takes place. It is to be mentioned that the felt material is encased in an outer plastic material film which retains the resin matrix as it is being used to impregnate the felt.

Generally, therefore whilst the felt material has been used successfully and performs an important function, its use does bring problems in manufacture, and increases expense.

An object of the invention is to provide a method of manufacturing a lining including a resin matrix layer which has, without having to use felt or the like carrier, the appropriate durability, tactility and strength to be capable of being handled like the conventional lining which contains felt.

A further object is to make use of a curable resin matrix formulation which is extrudable into the resin matrix layer and will remain uncured for long periods of time until activated by the application of energy.

A further object is to provide a cured in place lining containing curable synthetic resin, whereby the use of the conventional felt may be eliminated.

A further object of the invention is to provide a lining which can be produced quickly and efficiently without requiring the use of a plant to form felt material into tubular configuration.

A further object is to provide a lining which can be readily handled for placement on the pipeline or passageway surface.

The present invention is specifically concerned with the provision of linings which do not have a carrier, in order to save costs and facilitate production, and proposals for providing a carrierless lining are set forth herein.

Specifically, a resin matrix layer with or without additional filling material such as granules and fibres is produced by an extrusion process, with or without calendering, and bounding films may be applied to the surfaces of the extrudate to form a composite lining in tube or web form. For such a system to function, the extruded resin matrix layer must have sufficient coherency to remain as an even thickness layer throughout the circumference of the lining, and therefore although the resin matrix layer must remain tactile so that the resulting lining is flexible, the resin matrix layer must not be of such low viscosity that it will flow or collect leading to resin starvation in different regions of the lining.

The present invention thus arranges for the resin matrix layer in such a system to have the required viscosity and performance for linings for lining underground passageways, but it is also recognised that such linings could have wider application, for example to form pipes.

In accordance with the invention there is provided a method of manufacturing a lining for use in lining or forming a pipeline comprising the steps of
a) extruding a tube of plastic mass which is to form a resin matrix layer of the lining and is composed mainly of a thermosetting resin matrix and which is designed to be cured to a rigid pipe after the lining is placed in position,
b) providing an anti-stick layer on the inside surface of the resin matrix layer
c) flattening the lining; and
d) folding or coiling it for storage.

Also according to the invention there is provided a method of manufacturing a lining or forming for use in lining a pipeline comprising the steps of
a) extruding one or more sheets, or extruding one or more tubes and cutting it or them into sheets of a plastic mass which is to form a resin matrix layer of the lining and is composed mainly of a thermosetting resin matrix which is designed to be cured to a rigid pipe after the structure is placed in position,
b) connecting two of the thus produced sheets edge to edge to form a larger sheet, and forming the larger sheet into tubular form,
c) providing an anti-stick layer on the inside surface of the resin matrix layer,
d) flattening the lining; and
e) folding or coiling it for storage.

The or each anti-stick layer may be provided by any suitable means. For example it may comprise a plastics film material, which preferably will be in the form of a tube located inside the resin matrix layer. Alternatively, it may be in the form of a coating, sprayed onto the extrudate as it emerges from the extrusion die. As a further arrangement, it may be a powder, such as talcum powder, or the anti-stick layer could even be formed by partially curing the matrix on the surface only thereof, by the application of some curing means such as heat, again applied as the extrudate emerges from the die, and before the extrudate is moved to flattened form.

The invention further provides a lining for use in lining or forming a pipeline, comprising a tube which is composed mainly of a thermosetting resin matrix layer which is designed to be cured to a rigid pipe after the structure is placed in position, characterised in that the resin matrix layer is an extrudate of a plastic mass and is provided with an anti-stick layer on its inner surface so that the lining can be folded and stored.

In a specific example, the resin matrix layer preferably comprises an epoxy resin of the type sold by Shell Chemicals under No 828 with the recommended catalyst diethylenetriamine (DETA). For normal full curing of this resin matrix layer there would be 8/10 parts DETA to 100 parts epoxy resin, and in order to achieve a two-stage cure only 2 parts DETA per 100 parts resin would be free in the resin, and the remainder would be absorbed in absorbent particles such as clay particles as described for example in our International Patent Application No PCT/GB94/01453. The resin matrix layer preferably also includes a filler such as natural, specifically cellulose, fibres with additionally a small amount of gelatin wherein some of the catalyst is used to partially cure the resin or glycerine (which helps in the extrusion process) but does not affect the physical strength of the finally cured lining pipe. The matrix layer may include some additional filler such as sand or glass spheres and the addition of some heat may assist in achieving the first stage characteristic.

In a second embodiment of the invention good results have been achieved using a resin matrix which is "filled" with fibrous material in particular natural, and more particularly cellulose fibres in the form of reconstituted newsprint, jute, hemp, wood or the like. Such fibres tend to absorb the base resin and increase the viscosity of the matrix layer making the mixture extrudable into abnormally stable sheet or tube form. Slender, raw wood fibres or even straw fibres may be used.

A further additive preferably is included to improve the rheology of the matrix and its capability of even flow through the extrusion equipment, and such material may be, with an appropriate resin, a thermoplastic material such as a phenoxy resin, a polycarbonate resin, plastisol, or other material having polarised OH and other groups which bond to the fibrous filler.

This material imparts a rubber like characteristic to the extruded matrix and improves some of the physical properties of the cured lining pipe; an inorganic particulate filler may be added, such filler including glass spheres, calcium magnesium silicate or the like. The physical properties improved by this filler are the flexural modulus, and higher stress at first break of the lining pipe.

To improve the toughness of the resulting cured lining pipe an additive such as furfuryl alcohol preferably also is added.

The catalyst and/or accelerator preferably is absorbed in bentonite clay and/or some of the aforesaid cellulose or other fibres.

Also, the clays may be ultrasonically treated to cause the catalyst/accelerator/furfuryl alcohol or any other organic material to be absorbed therein. Such clays have a greater affinity for the fibres, as the organic material and clays have also become polarised.

In contrast, untreated clays, which may comprise as much as 15 to 20% water, simply do not adhere to the fibres and tend to separate therefrom, which is undesirable, in that it is important that the clays be evenly distributed throughout the fibres and the final fibre/resin matrix.

Finally, although the preferred base resin is an epoxy resin other base resins such as polyester and phenolic resins could be used; in the case where phenolic resin is the base resin an appropriate acid catalyst/accelerator would have to be used, and in the case where polyester resin is the base resin an appropriate material such as magnesium oxide or crystalline polyester resin would be sued as the rheology improver.

In a further particular example, the resin matrix is formulated so as to be extrudable and the catalyst and/or accelerator is contained therein but in an inhibited fashion. In one example, Shell 828 resin and the additive of the description Paphen Phenoxy Resin (PPR) are mixed. PPR is a tough and ductile thermoplastic material having high cohesive strength and good impact resistance. The ether linkage and pendant hydroxyl groups promote wetting and bonding to certain materials which may be introduced as substrates and fillers, including polar substrates. PPR is compatible with many basic resin polymers and acts as an efficient means for rendering the resulting matrix flexible, especially the rendering flexible of cross linked epoxy formulations. PPR imparts to the matrix qualities which make it excellent for extrusion and enhances structural integrity.

In the specific formulation adopted, 10 to 15 parts by weight of PPR, which is a white crystalline powder, were mixed with 100 parts of the Shell epoxy base resin and the mixture was left under warm conditions (80°C) for one hour, following which the mixture was cooled. This enables the PPR to dissolve and combine with the epoxy resin.

To the resulting mixture was added furfuryl alcohol in the ratio 5 parts of the alcohol to ever 100 parts of the mixture to provide enhanced physical properties in the finally cured resin system.

Next, 30 parts by weight of hollow glass spheres were added for every 100 parts of the mixture.

Next, clay particles with DETA absorbed therein were added to the mixture in the ratio of 30 parts by weight of the clay particles loaded with DETA to every 100 parts of the mixture, and finally to the resulting mixture for every 100 parts thereof was added 5 to 10 parts of cellulose fibre.

The final mixture or the final resin matrix was efficiently extruded to form resin matrix layers as tubes or sheets which could be used to form linings capable of being inverted without losing their structure and integrity and without displacing/distorting the matrix layer. The phenoxy resin mixture is a tough and ductile material with high cohesive strength and good impact resistance. Its ether linkages and pendant hydroxyl groups promote wetting and bonding to polar substrates and fillers. It is an efficient flexibilizer for crosslinked epoxy formulations, and is compatible with polar materials and surfaces. It imparts outstanding properties in molding and extrusion applications, giving enhanced structural integrity to plastic systems. It behaves in a similar way as metals do in forming alloys where various components work synergistically to improve the properties of the composition. Due to the high compatibility of the phenoxies, their strength and flexibility can be combined with other resins similar to the epoxy 828.

In summary, the desirable Phenoxy Resins Properties are
Improved mechanical performance because of better pigment and filler wetting.
Improved dyeability and adhesion
Good mechanical properties, strength and ductility
Heat sealability
Good adhesion to polar polymers
Low order of odor
Compliance with FDA regulations for food contact
Resistant to gas permeability.

### Phenoxy Resin Structure

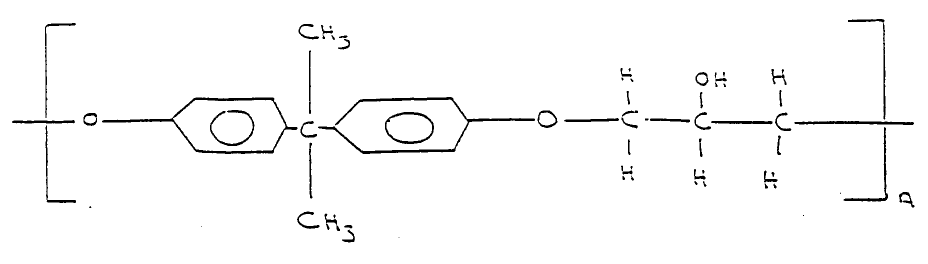

### A Specific method of producing the matrix is now given

5-15% phenoxy resin (white crystalline powder) is mixed with Shell 828 epoxy base resin and left under warm conditions (80°C) for 1 hour (3 mins under microwave or ultrasonic conditions) allowing the phenoxy resin to dissolve/combine with the epoxy resin. Clay absorbed DETA (Diethylenetriamine) is mixed with the epoxy/phenoxy blend at 30pph when the temperature has dropped below 50°C (this will avoid the initiation or release of DETA out of the clay) 20- 30pph solid glass spheres, 5pph furfurol alcohol and 5-10pph cellulose fibre are also added to give strength to the matrix and enhanced physical properties to the final cured lining pipe. These additives are added to the epoxy/phenoxy blend which is still in a warm (30-50°C), low viscosity state. On addition, a thick paste type of material is formed and can be easily extruded. As the material cools, a flexible, strong material forms (the material can be extruded in the cold state).

The cellulose fibres provide exceptional viscosity building and reinforcing qualities. The fibres have a high surface area due to their rugosity, and hydroxyl groups which form hydrogen bonds with other substances produce greater reinforcement between fibre and resin matrix. As a result of specific electrical properties and the large number of hydroxyl groups, the surface activity of the cellulose fibres produces extensive thickening and excellent flow control characteristics. The process of reinforcement through bonding produces superior anti-sag and flow control characteristics at low cost and reduced weight. The high surface area and very low specific gravity (1.1) provides high bulking and absorption for the formulation (absorbs up to six times its own weight).

The resulting epoxy resin matrix layer cures at 80-90°C over a 2-3 hour period.
Physical properties: Flexible Modules (average) 4300 Mpa
Stress at first break 60 Mpa
Contents of epoxy matrix:
   Epoxy 828 resin (Shell)
   Furfuryl alcohol
   Paphen Phenoxy Resin
   DETA
   Clay for DETA absorption
   Cellulose fibre
   Glass spheres

In a modified arrangement of the above, the furfuryl alcohol is also contained in absorbent particles, such as the clays described. Equally, the furfuryl alcohol may be absorbed into the particles by means of sonic energy, specifically ultrasonic energy (although it is believed that sonic energy in the audible range may be used).

By absorbing the furfuryl alcohol into the absorbent particles, it is prevented from causing premature leaching of the catalyst and/or accelerator from the other particles in the matrix. Therefore, in addition to providing the desirable physical properties as described, the furfuryl alcohol in this arrangement can be considered as an accelerator insofar as when the curing step is effected, the furfuryl alcohol will be released from the absorbent particles, and will cause leaching of the catalyst and/or hardener from the other particles which will in effect cause acceleration of the cure.

The furfuryl alcohol preferably is contained in the resin matrix in the same proportion as described in the above applications, and the appropriate quantity of absorbent particles will be utilised to accommodate this proportion of the furfuryl alcohol.

The absorbence of the furfuryl alcohol into the particles enhances the functioning of the resin matrix layer and overall improves the process.

In a variation in the composition of the resin matrix, instead of using the phenoxy as described, two different kinds of the base polyester or epoxy resin are used to produce the same effect. Specifically, one resin is in solid form, and is mixed with the other resin which is in liquid form. The resins may be mixed in a ratio of 50%-50% and then the mixture is heated to melt the solid resin. Instead of a solid resin a viscous crystaline resin may be used.

The resins are mixed for example at a temperature in the order of 110°C and are allowed to cool. As they cool the mixture becomes a rubbery viscous mass and at this stage the fibres and clay are added, and the resulting material can be extruded as described above. The mixture may be enhanced by adding a little polycarbonate or a very small amount of the phenoxy resin.

The extrudate can be produced using conventional or clay pipe making machinery, and as a possible anti-stick layer it may be possible to use a quick curing film of polyurethane or liquid film applied as the extrudate emerges from the extruder. In another arrangement, talcum powder may be applied to the inner surface of the extrudate as the anti- stick layer

In this case there may be no need for a separate film layer.

The present invention provides linings which may be carrier- less and are produced by extrusion of the matrix in tubular form, or are "overlap" tubes produced from an extruded flat sheet or sheets of the resin matrix and/or extruded tubes which are subsequently slit to produce such sheet or sheets and the sheet or sheets being wrapped to tubular form (when it is to be used) so that free edges thereof overlap and are bonded together. If required, where said edges overlap, a strip or strips of the anti-stick layer, may be removed when removable, so that the opposite raw resin faces of sheet or web which overlap come face to face and can be secured by warming and pressing and will bond together in the finally cured material. Such flat sheets have the advantage that they can be used for a range of sizes of passageway assisting with inventory problems.

The advantage of the invention can be immediately understood insofar as the resin matrix layer will form the lining or main part thereof and subsequently, the resin matrix layer can be cured to a hard condition by the application of suitable means such as radiation or heat or the like to release the inhibiting effect on the catalyst and/or accelerator (and furfuryl alcohol) or remainder of the catalyst and/or accelerator. The resin matrix layer therefore behaves as a tactile mass and by the use of anti-stick layers the lining can be moved to a flattened condition for storage and subsequent use. In the present invention, use is made of an inhibiting means to inhibit the catalyst and/or accelerator (and furfuryl alcohol), and therefore the same uncured characteristic can be achieved but without the necessity of using high temperatures and pressures to effect the final cure. Indeed, in one specific example, when absorbent particles are used for inhibiting the catalyst and/or accelerator (and furfuryl alcohol), the final cure is effected by subjecting the resin matrix to ultrasonic energy.

With the preferred form of the invention, as the lining has no carrier felt there is no separate bag/tube fabrication, no vacuum impregnation process - and thick or thin linings can be made as required.

In each embodiment, the resulting lining is tactile and can be everted in an eversion process. The lining may be bounded on one or both sides with a retaining film forming an anti- stick layer.

When the extruded resin matrix extruded in tubular form, it is preferably extruded over an internal plastic film tube which forms the anti-stick layer and which may also be extruded. This tube could be provided with a reinforcing tube such as a woven or knitted tube which, when the resulting lining is everted, becomes an outer reinforcing tube. By providing this reinforcing tube the resulting rigid pipe could form a pressure pipe. The tube may also have a reflecting layer for reflecting the energy which is used for curing, back through the resin matrix layer.

The abovementioned reinforcement layer may have the capability of expanding at least slightly circumferentially, but be longitudinally is resistant to extension in order to give the lining longitudinal strength to prevent it from extending and fracturing under the eversion pressures which will be involved. The reinforcement layer may comprise longitudinal and circumferential fibres or filaments of which the longitudinal reinforcement synthetic filaments or yarns are of low stretch, whilst the circumferential reinforcement may be yarns of natural fibres of high stretch. An alternative form of reinforcement material which provides the same effect, is a netting type material of fibrous and/or filamentary strands which define a tubular form, and the stands extend axially in at least two groups. These axially extending strands also extend slightly helically but of opposite hand, and are bonded or otherwise secured together at the points of intersection. Such a tubular material is known, and is used as netting for holding articles such as household articles and consumer goods, especially apples and oranges. This tubular material can be compressed into rope-like form, and when in this form, the said strands will lie substantially axially. As the material is expanded to tubular form however, the angle of the helix of each set of strands increases, and the material does have a good circumferential yield characteristic but yet retains considerable tensile strength longitudinally, giving it perfect characteristics for the purpose of reinforcing a lining which is to be everted into position as described herein.

According to a preferred feature of the invention, when an outer film or coating is provided to form an anti-stick layer, said film or coating preferably is of a material which biodegrades when it comes into contact with either the medium which is carried by the passageway which the lining lines, or the medium which is used for applying the lining to the passageway, or the medium which is carried by the pipe.

The film or coating will form the inner side of the lining when it Is everted, and such film or coating preferably being of a polyester which is stable in air and ultra violet light (for many years) but when it is contacted with water (when it is inverted) it will start to biodegrade and in a few weeks it will disappear. Treatment with ultrasonic energy, to cure the resin matrix layer may also assist in accelerating the disintigration of the film. The advantage of this arrangement is that it is no longer necessary to endeavour to bond the film to the resin matrix layer as has been done in the past without much success.

Where, as in the majority of cases, there is an anti-stick film on both sides of the resin matrix layer, only film which is to lie on the inside of the resin matrix layer when in position need be of the biodegradable material, but both films can be of this material if required.

Initially, and in each case, the extruded resin matrix layer takes on the consistency of leather or rubber, and is handleable and will withstand a reasonable amount of tensile force (especially when provided with said reinforcement), but curing can be effected in a subsequent stage by the application of energy to release the inhibited catalyst and/or accelerator.

Embodiments of the invention will now be described by way of example with reference to the accompanying drawings.

In the drawings:-
Fig. 1 is a diagrammatic sectional view showing how the resin matrix is extruded in tubular form;
Fig. 2 is a diagrammatic perspective view of the arrangement of Fig. 1 showing the extrusion process;
Fig. 3 is a sectional elevation through a lining produced by the method as shown in Fig. 2;
Fig. 4 is a perspective view of a further embodiment of the invention, wherein the extrudate is in the form of a flat sheet;
Fig. 5 is a perspective view showing how the extrudate of Fig. 4 may be prepared for wrapping into a lining;
Fig. 6 is a sectional view showing how the extrudate of Fig. 4 is made into a lining;
Fig. 7 is a view similar to Fig. 1 but showing the introduction of a reinforcement layer;
Fig. 8 is a perspective view of a portion of the, reinforcement layer of Fig. 7;
Fig. 9 is a diagrammatic view of an extrusion process which is modified as compared to the previously described arrangement;
Fig. 10 shows a schematic representation of a specific manufacturing process according to the invention;
Fig. 11 shows a more detailed schematic view of the extrusion process and extruder of Fig. 10;
Fig. 12 shows an embodiment of the bearing shown in Fig. 11; and
Fig. 13 shows the "rolling pig" unit of Figs. 1 and 2 in greater detail.

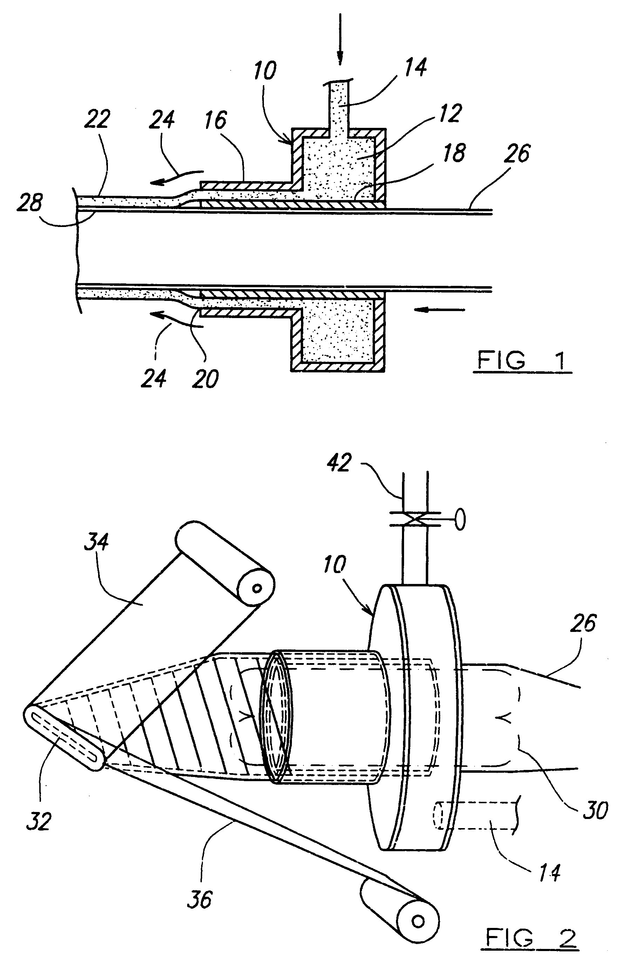

Referring to the drawings, and firstly to Fig. 1, an annular extrusion head 10 comprises an annular cavity 12 to which the resin matrix to be extruded is supplied through inlet pipe 14.

Die 10 comprises an outer tubular element 16 and an inner tubular element 18 which are coaxial and spaced to provide an outlet annulus 20 forming the die aperture. As will be appreciated, the material to be extruded is forced into the cavity 12 through inlet pipe 14, and is caused to extrude through the annular outlet die 20 in tubular form as indicated at 22. This extrudate forms a resin matrix layer in the finished lining. The matrix layer is dense but flexible and is specially formulated to be in this form. The extrusion proceeds in the direction indicated by arrows 24, and the die 10 has a central opening through which is fed a tubular film 26 which is shown as being held in round inflated condition so as to lie to the inside of the extrudate as shown at region 28. Film 26 is of flexible plastics material and forms an anti-stick layer. Alternative anti-stick layers may be formed by spraying powder or coating onto the inner surface of the extrudate. Again, the anti-stick layer may be formed by curing the inner surface of the extrudate.

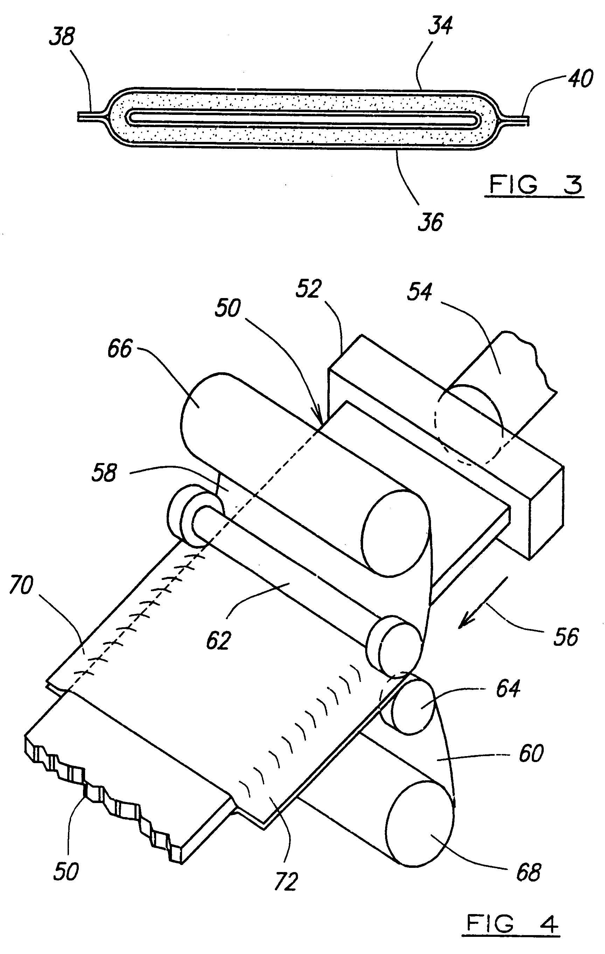

Fig. 2 shows the arrangement of Fig. 1 in perspective elevation and in slightly more detail, and also shows the modification that a rolling pig 30 is provided inside the inner film 26 to support same as it moves through the die. The figure also shows that after the extrusion has been completed, the resulting laminate comprising the film 26 and the extrudate 22 is moved to a flattened condition as indicated at reference 32, and over this flattened laminate are applied two webs 34 and 36 from above and below which also form an anti-stick layer. The two webs 34 and 36 are heat sealed at edges 38 and 40 as shown in Fig. 3 where they overlap the flattened laminate of the inner film and extrudate, to complete the production. The webs 34, 36 are preferably of the biodegradable character referred to herein.

By virtue of the anti-stick layers 34,36 the resulting lining can be flattened (as shown in Fig. 3) and then folded or rolled for storage for subsequent use, an important feature of the invention.

In Fig. 2 the resin inlet 14 is shown as being to the underside of the annular cavity 12, and also shown is a vent 42 by which air can be vented from the cavity 12.

As the lining is designed to be stored for subsequent use, it is preferable that the resin matrix be of a type which will have a long shelf life, and can be cured slectively as described hereinbefore.

The tubes 16 and 18 forming the outlet die 20 may require to have a spider therein in order to maintain their spaced relationship, and such spider should be designed so that as the matrix passes over the legs of the spider, it will coalesce into a coherent mass.

It may be appropriate to use an inner former in order to change the shape of the extrudate from circular to the flattened shape 32 over a distance which should be long enough to achieve the desired result, and the rolling pig 30 may well perform this function. Appropriate conveyors will be used to support the lining as it is being manufactured.

In the embodiment of the invention shown in Figs. 4, 5 and 6, an extrudate 50 of the same matrix as the extrudate 22 is extruded in sheet form from an extruder die 52 which is supplied with the resin matrix form a conventional extruder feed screw 54. The extruded sheet forms the resin matrix layer in the finished lining.

As the extrudate moves from the die 52 in the direction of arrow 56, two plastic films 58 and 60 (one or both being preferably biodegradable) forming anti-stick layers are applied thereto via rollers 62 and 64. The webs 58 and 60 are supplied from rolls 66 and 68 of the plastic film.

The films 58 and 60 are wider than the extrudate 50 so that the overlapping portions are in fact sealed together in the regions 70 and 72. Sealing may be effected by the said rollers 62 and 64 by means of heat sealing collars at the ends of the rollers.

The resulting laminate is shown clearly in Fig. 4 and it comprises the extrudate 50 flanked by the enveloping sheets 58 and 60.

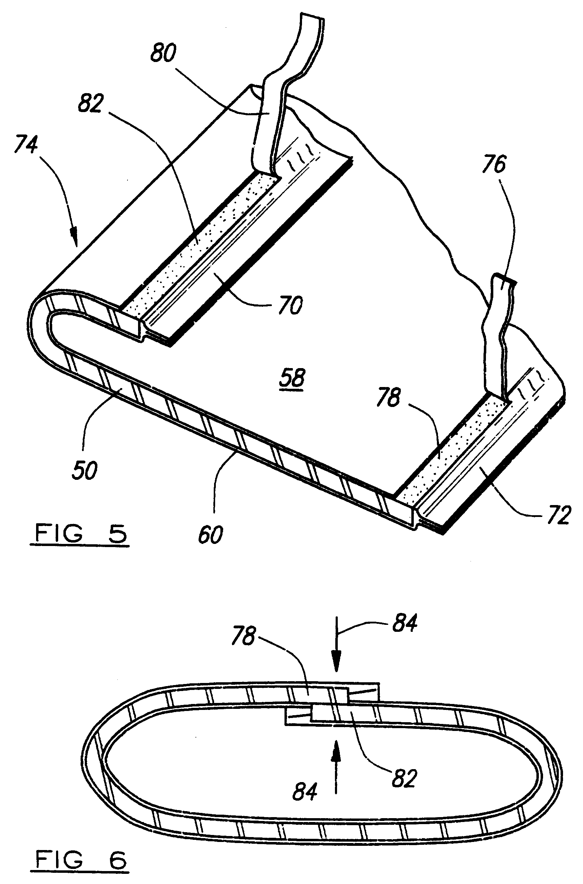

Figs. 5 and 6 show how the material produced by the method of Fig. 4 can be used according to the invention for producing linings.

In Fig. 5, the laminate is shown, and one side edge has been turned over as indicated at 74 in order to illustrate the method steps which are effected.

If film 58 is considered as being the upper side of the laminate and film 60 as the lower side, along one edge of the upper side and adjacent the seam 72, strip 76 of film 58 is peeled back to expose a strip of the resin matrix indicated by reference 78. Similarly, on the underside, the film 60 has a strip 80 peeled back adjacent the sealed edge 70 to expose a strip 82 of the resin matrix at the edge of the laminate.

In order to form the laminate into tubular form, it is simply a matter of bringing the strips 80 and 78 of the resin matrix into register followed by the pressing of the strips together and the warming of same, as indicated by arrows 84 in Fig. 6, when the strips 78 and 80 then become bonded and coalesced, resulting in a tube which can be used in a similar fashion to the tube described in relation to Figs. 1 to 3.

This concept of producing the lining from a laminate produced by extruding a resin matrix which is of a curable nature constitutes another aspect of the present invention, and it may not be necessary in such aspect to use a resin matrix which has a catalyst inhibitor according to the examples given hereinbefore, but any suitable resin matrix which can be cured can be used. Indeed, even with the extruded tubular extrudate produced according to the method of Fig. 1 or Figs. 7 and 8, the resin matrix can be any suitable as the idea of extruding the tube and applying anti-stick layers such as an inner film and outer covering constitutes a patentable novelty and although it is preferred that a specific extrudate be used in each of the processes of Figs. 1 and 4, these methods have wider application.

Instead of peeling the strips 76 and 80 back as shown in Fig. 5, the sealed edges 70 and 72 may be prised open and the peeling back may be towards the centre of the laminate, and the peeled back strips can be repositioned after the bonding together of the overlapped edges 82 and 78 of the resin matrix.

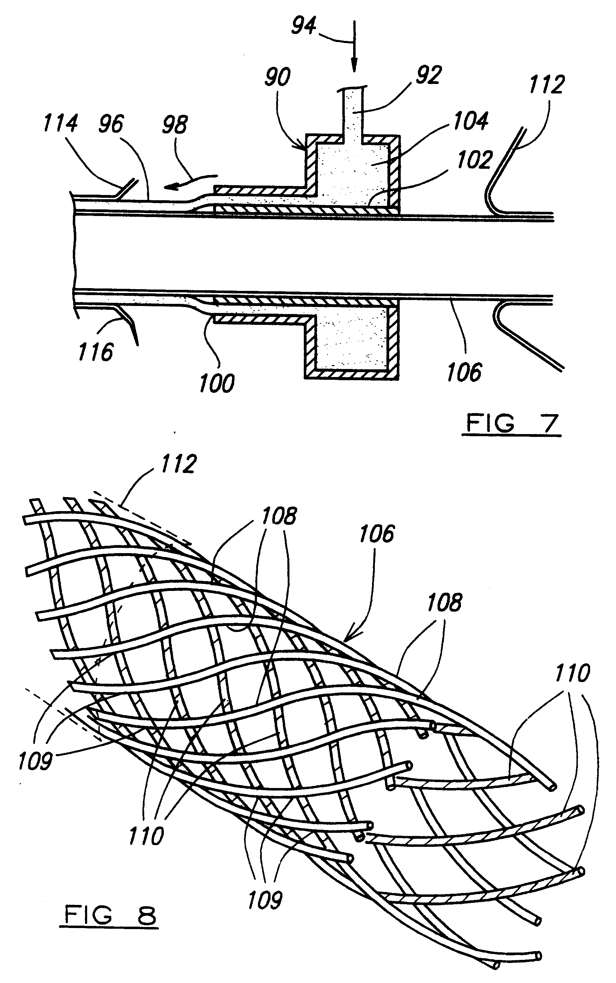

Referring now to Figs. 7 and 8 of the drawings, Fig. 7 shows an extruder 90 which is similar to extruder 10 of Fig. 1 from which the extrudable matrix 92 (as already described) fed into the extruder as indicated by arrow 94 is extruded in the form of a tubular extrudate 96. The extrudate issues in the direction of arrow 98, from a tubular die 100 of the extruder 90. The inner diameter of the tubular die is defined by a tube section 102 of the extruder, and reference 104 indicates the matrix inside the extruder.

Into the tubular section 102 is fed a reinforcement structure 106 which is in the form of a tube made up of fibrous and/or filamentric material having, as shown in Fig. 8, longitudinal filamentary reinforcement 108, 110.

The reinforcement material 106 is a netting type material of fibrous and/or filamentary strands 108,110 which define a tubular structure, and the strands extend axially in at least two groups 108, 110 of which one group is shown with hatching lines for clarity of illustration. These axially extending strands 108, 110 also extend slightly helically but of opposite hand, and are bonded or otherwise secured together at the points 109 of intersection. Such a tubular material is known, and is used as netting for holding articles such as household articles and consumer goods, especially apples and oranges. This tubular material can be compressed into rope- like form, and when in this form, the said strands will lie substantially axially. As the material is expanded to tubular form however, the angle of the helix of each group of strands increases, and the material does have a good circumferential yield characteristic but yet retains considerable tensile strength longitudinally, giving it perfect characteristics for the purpose of reinforcing a lining which is to be everted into position as described.
The structure 106 can be when unstressed as shown in Fig. 8 of 10-15% lesser diameter than the outer diameter of the lining, but can expand up to the diameter of the pipeline or the passageway which is to be lined when it is everted thereinto.

The reinforcement tube 106 will either form the anti-stick layer or be used in conjunction with such a layer, such as a plastic film or other layer as described.

As shown in Fig. 8, the reinforcing tube 106 may be initially provided with an outer coating 112 of a plastics material which serves to contain a resin preparation with which the tube 106 preferably is initially impregnated. This resin preparation preferably is of the same nature as matrix 94, except that it may be of slightly less viscosity so that it can readily bond to the extrudate 96 when it comes into contact therewith after passing through tube section 92. The coating 112 preferably is peeled away immediately before the structure 106 enters the extruder as shown in Fig. 7.

Again, a pair of films 114 and 116 are applied over the extrudate, and are sealed at the edges similar to that shown in Fig. 3 in order to complete the lining. One or both of the films may be biodegradable as described herein. The lining can be stored and used subsequently when required.

The inclusion of the reinforcing tube 106 in the finished liner greatly improves its quality.

The filaments 108,110 may be for example polyester or polypropylene or some other material that will not stretch which enhances the eversion process.

The tubular structure 106 will be relatively thin compared to the thickness of the extrudate 96, and may be for example in the order of 1.5mm thick.

The inclusion of the reinforcement 106 should also improve the physical properties of the finished rigid lining pipe.

In the arrangements described above, the ingredients of the matrix are mixed together and are then extruded through a a cross head die extrusion apparatus. The extrudate may be a sheet, or a tube, or other suitable form, and it is specifically recited that the base material should include a fibrous material. Specifically, the fibrous material is a cellulose fibrous material, as this has particularly good characteristics having regard to the purposes to be served by the extrudate.

A considerable amount of mechanical work must be performed by the extruder in mixing and ejecting the extrudate, which is a relatively viscous mass having a high shear strength. Because of its consistency, the mass may be difficult to handle and because of the large amount of work done on the viscous mass, high wear of the extruder and high running costs may result.

According to a preferred feature, an improved process for producing the extrudate, provides that the fibrous material(s), with or without any one of more of the various additives, is passed through the extrusion apparatus so as to experience compaction, which has the effect of displacing as much air as possible from the compacted fibres, and the base resin, with or without any one or more of the various additives, is injected into the compacted fibrous material before it is extruded.

By this arrangement, there is minimum work done on the fibrous material by the extrusion and mixing apparatus, being required only to mix and compact the fibrous material (with any one or more of the additives), and subsequent to the compaction, the resin is injected into the compacted fibrous material. If desired, a vacuum may be connected to the apparatus in order to extract air therefrom, so that there will be effective impregnation of the fibrous material by the injected resin. The base resin typically may any as described herein.

The additives typically comprise the catalyst, preferably contained in clay particles, the accelerator, furfuryl alcohol, which may also be contained in clay particles, and hollow glass spheres. Depending upon the size of these materials, they may either be included in the fibrous material and passed through the entire mixing and extruding apparatus along with the fibrous material, or they may be included in the base resin to be injected into the compacted fibrous material.

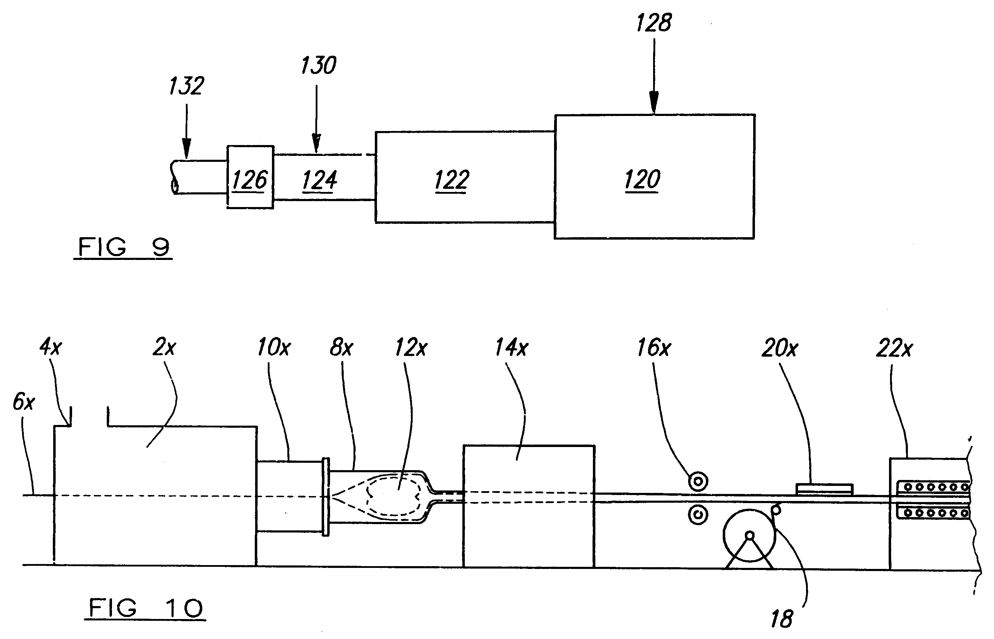

By way of example of this preferred feature, reference is now made to Fig. 9.

In Fig. 9, a processing line is shown and comprises a blender 120, a compactor 122, an extrusion screw 124, and an extrusion head 126. The arrow 128 indicates where, according to the invention, filler material in the form of fibrous material is charged into the blender, from a hopper (not shown). This material can be considered to be "dry" insofar as although a resin matrix extrudate is eventually produced, no liquid or fluent materials are introduced at location 128.

The. fibrous material is mixed in the blender, and then is compacted in the compactor 122, which may comprise a pair of compacting screws or similar apparatus, and then the compacted fibrous matrial is fed via the screw feeder 124 to the die 126.

The base resin i.e. the liquid component, is injected into the screw section 124 as indicated by arrow 130 and will be injected into the compacted fibrous material in order to impregnate same, and to produce an extrudable mass which emerges from the die 126 in any suitable form such as a flat sheet or a tubular extrudate 132 as described herein. The resin can be injected at any suitable location downstream of the compactor and upstream of the die.

The two basic components which are introduced are the filler and the base resin, but the final extrudate as described may have a number of additives, and these additives can be added as to any or every one of them along with the filler or along with the resin, depending upon the size of the additives and depending upon how they may effect the blending, compacting and extruding apparatus.

Further advantages of this feature of the present invention are that subjecting the base resin to high temperatures in the mixing and blending apparatus is avoided so that premature curing is avoided, the subsequent cleaning of the apparatus is simplified as the early stages do not include any residual base resin, and by pre-compacting the fibrous material, a higher percentage of fibres in the final extrudate may be achieved, making the final extrudate less expensive.

The resin matrix preferably will be of the formulation hereinbefore described to give it the viscosity characteristic which is needed for extrusion and stability. It may also include reinforcement such as fibrous material which may contribute to the features, mentioned above, of viscosity and stability.

According to another feature of this invention, the resin mixture is pumped into the fibre mass at a temperature in the region of 35 degrees C to improve the flow, the resin having been previously de-gassed. By virtue of the treatment of the fibres, the wetting of the fibres by the resin, is improved. Additionally, ultrasonic energy can be used to treat the mixture of fibres and the resins in the vicinity of the pressure chamber of the extruding apparatus. For example, ultrasonics can be used around the said pressure chamber, which enhances the degree of mixing which can be achieved before extrusion.

Preferably, because the extrudate comes out of the extruder at a temperature in the region of 35 degrees C, it is cooled to increase the viscosity of the extrudate to improve its handling characteristics.

The materials which are used for the anti-stick inner and outer envelope films require to be strong enough to withstand temporary loads which would be imposed during handling and installation. They may have textured surfaces adjacent the resin matrix layer to prevent slippage between the films and the resin. The purpose of using filler in the resin matrix layer is to give the matrix sufficient strength and stability to prevent the extrudate from disintegrating as it leaves the die.

The advantages of the invention having regard to the above discussion will be understood. The need to prepare dry felt tubes is eliminated, and also eliminated is the need to impregnate dry felt tubes. This means furthermore that the viscosity of the matrix can be much higher than the viscosity of the resin which is currently used to impregnate dry felt tubes. The impregnation of dry felt tubes requires the resin to be of a low viscosity so that it can flow freely into the interstices between the fibres of the felt. Such requirement is not present in the present invention.

In the mixing of the resin matrix, care should be taken to ensure that all air is eliminated therefrom, as it is undesirable to trap air within the extrudate.

The extrusion method illustrated shows the extrudates travelling horizontally. It is appreciated that this could be performed in another direction, for example vertically downwards which may well provide additional advantages concerning even distribution of the resin matrix in the extrudate because it is important that the extrudate should be of even thickness and should remain of even thickness during subsequent handling and installation.

By virtue of extruding the matrix to form sheets and tubes, so the sheets and tubes can be tailored to suit the passageway to be lined. Thus, manufacturers of the tubes and sheets can make them to order, or they can be made to a standard size and stored for subsequent use. Additionally, larger diameter tubes can be formed from the extruded tubes and sheets by the overlapping method described herein. Thus, flat sheets can be overlapped and joined and formed into a larger tubular structure, or sections of the tubular structure can be made from extruded tubes which are slit longitudinally and opened out then overlapped with other sheets or tubes in the manner hereinbefore described. In each case where an overlap is formed it is preferred that a seal be applied over the overlap to complete the tubular structure.

The embodiments of the invention of Figs. 9 to 13 are included as they show more specific detail. All of the features described hereinbefore are of course applicable to these more specific embodiments.

Referring now to Fig. 10 which shows one specific embodiment of the invention, there is provided an extruder 2X which is fed through an opening 4X with an extrudable mass (not shown in this figure), of the type herein described and which is also fed an anti-stick liner sleeve 6X.

An extrudate 8X emerges from a heated die head 10X towards which the extrudable mass is urged by the extruder 2X, and the configuration of the extruder 2X is such that the liner sleeve 6X also emerges from the heated die head 10X but inside the extrudate 8X. A "rolling pig" 12X is disposed within both liner 6X and extrudate 8X. The rolling pig 12X is adapted to roll around itself thus forcing the liner sleeve 6X against the inner surface of the extrudate 8X. As the extrudate 8X is relatively warm on emerging from the heated die head 10X, and thus is slightly adhesive, a bond is formed between the inner surface of the extrudate 8X and the outer surface of the liner sleeve 6X due to the pressure exerted by the rolling pig 12X between these two surfaces.

A cooling unit 14X cools the extrudate and liner, which are then flattened by rollers 16X. The outer surface of the extrudate 8X is then provided with an outer membrane 18X which forms a protective, non-adhesive surface for the extrudate 8X after it is welded to same by a welder 2X.

A "haul off" machine 22X provides the force required to take up any slack in the extrudate 8X and liner sleeve 6X after they emerge from the extruder 2X, and produces a uniform composite for storage.

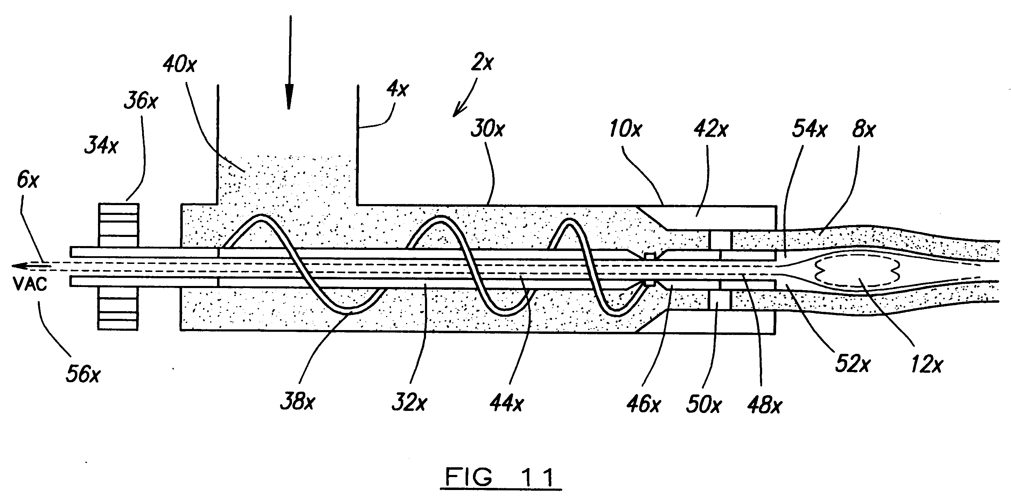

Referring now to Fig. 11, the extruder 2X is provided with an outer bore 30X within which an extruder shaft 32X is adapted to rotate in a direction 34X. This motion is provided by drive means 36X attached to the extruder shaft 32X at some external portion thereof. The extruder shaft 32X is provided with a continuous helical blade 38X, whose representation in Fig. 11 is schematic only.

The extrudable mass 40X, of the composition set forth herein, provided through opening 4X is urged towards a heated die head 10X once inside the extruder bore 30X by said helical blade 38X as it rotates.

The die head 10X is provided with an annular constricting wedge 42X which reduces the maximum diameter of the resulting extrudate 8X, and compresses the extrudable mass 40X as it passes through the said die.

The extruder shaft 32X has an internal bore 44X through which a liner sleeve 6X or other material may pass during the rotation of the extruder shaft 32X and which is subsequently pressed onto the inner surface of the extrudate 8X by the rolling pig 12X as hereinbefore described. The liner sleeve 6X thus prevents the inner surfaces of the extrudate 8X from adhering after the extrusion process and when the resultant tube is stored in its usual flattened condition.

One extremity of the extruder shaft 32X is connected to a cylindrical former 46X which is disposed within the die 10X and is of substantially the same length as the said die, but may be of any length and may project from the end of the said die. The extrudable mass 40X passes between the cylindrical former 46X and the annular constricting wedge 42X and is thus formed into a tubular extrudate 8X as it progresses through the die 10X.

The cylindrical former 46X is also provided with a hollow bore 48X for the passage of the liner sleeve 6 as previously mentioned.

In the embodiment represented in Fig. 11, the cylindrical former 46X is supported within the die 10X by a spider through which a vacuum may be drawn in the hollow bore 44X of the extruder shaft 32X and hollow bore 48X of the cylindrical former 46X. In this case, low pressure regions 52X, 54X are created between the liner sleeve 6X and the extrudate 8X immediately after the die head 10X which further aids the adhesion between the liner sleeve 6X and the inner surface of the extrudate 8X normally effected by the rolling pig 12X.

It is important that as little air as possible is trapped within the resultant composite tube as this can dramatically increase the space required for storage of the tube. A vacuum will therefore usually be drawn inside the liner sleeve 6X itself using external means as indicated by referencce numeral 56X.

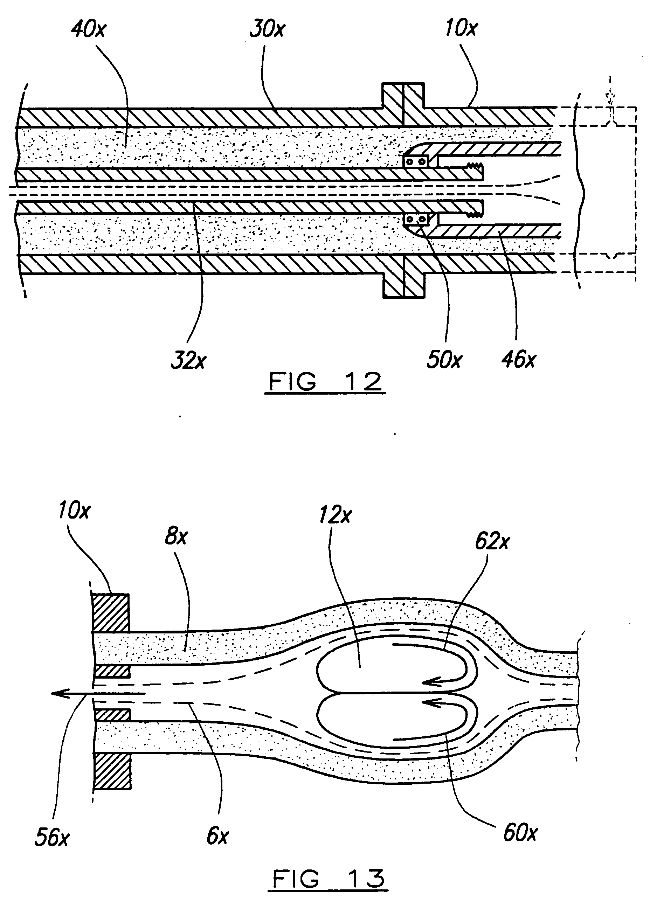

Fig. 12 shows an alternative configuration of the die head 10X in which the cylindrical former 46X is connected to the extruder shaft 32X, and is not supported by the spider 50X as in Fig. 11. The cylindrical former 46X is provided with an annular bearing 58X which allows free relative rotation between the cylindrical former 46X and the extruder shaft 32X.

In order to improve the cementation of the fibres in the extrudate, means may be provided to lock the cylindrical former 46X to the shaft 32X to rotate therein.

In use, the extrudable mass 40X within the bore 30X of the extruder 2X is known to rotate with the extruder shaft 32X, whereas the extrudate 8X emerging from the die 10X is not rotating, and there is therefore some frictional shear of the extrudate 8X between the cylindrical former 46X and the inner surface of die 10X as the extrudable mass 40X is urged into said die. These shearing forces may be exacerbated by the inclusion of a spider within the die, thus having a detrimental effect on the resultant properties of the extrudate 8X.

Fig. 12 shows another feature which is that the barrel 30X is extended (as is the former 46X) and inside is a channel 52X which extends around the inside of the barrel 30X. A radial feed bore 54X or several of said bores, leads to the channel 52X whereby resin or film forming material may be injected into the channel 52X to form a smoother attractive outer surface on the extrudate.

As the extrudate 8X and liner 6X emerge from the die head 10X they are compressed together by the action of a rolling pig 12X, as shown in Fig. 13. The rolling pig 12X maintains its position immediately adjacent the die head on account of two counteracting forces.

As the extrudate 8X and liner sleeve 6X emerge from the end of the die head 10X, their travelling motion persuades the two halves of the rolling pig 12X to rotate in opposite directions, as shown by arrows 60X, 62X. This rolling motion would ordinarily move the rolling pig away from the end of the die head 10X.

However, the vacuum drawn within the liner sleeve 6X has the effect of collapsing the extrudate 8X and liner 6X after the rolling pig 12X, due to the pressure differential within and without the said extrudate and liner. The rolling pig 12X is therefore urged towards the die head 10X, and with adjustment of the vacuum pressure and forward velocity of the extrudate and liner, the position of the rolling pig 12X can be controlled accordingly.

## Claims

1. A method of manufacturing a lining for use in lining or forming a pipeline characterised by the steps of
a) extruding a tube of a plastic mass which is to form a resin matrix layer of the lining and is composed mainly of a thermosetting resin matrix and which is designed to be cured to a rigid pipe after the lining is placed in position,
b) providing an anti-stick layer on the inside surface of the lining,
c) flattening the lining; and
d) folding or coiling it for storage.

2. A method of manufacturing a lining for use in lining or forming a pipeline characterised by the steps of
a) extruding one or more sheets, or extruding one or more tubes and cutting it or them into sheets of a plastic mass which is to form a resin matrix layer of the lining and is composed mainly of a thermosetting resin matrix and which is designed to be cured to a rigid pipe after the structure is placed in position,
b) connecting two of the thus produced sheets edge to edge to form a larger sheet, and forming the larger sheet into tubular form,
c) providing an anti-stick layer on the inside surface of the resin matrix layer,
d) flattening the lining; and
e) folding or coiling it for storage.

3. A method according to claim 1 or 2, wherein the resin matrix includes a fibrous filler.

4. A method according to claim 3, wherein the fibrous filler is cellulose fibres.

5. A method according to claim 4, wherein the fibrous filler is reconstituted newsprint, jute, hemp, flax, wood fibres and/or straw.

6. A method according to claim 3,4 or 5, wherein said fibrous material is contained in the matrix in the proportion of 5 to 30 parts per 100 parts of the mixture.

7. A method according to claims 3, 4, 5 or 6, wherein the fibrous material is fed into the input end of the extrusion apparatus dry and is processed to be compacted thereby as it moves towards a die of the extrusion apparatus, and after such compaction, but before the die, the base resin of the resin matrix is injected into the compacted fibrous material.

8. A method according to any preceding claim, wherein the matrix includes a catalyst/hardener and wherein the catalyst/hardener is contained in an inhibiting means preventing the catalyst/hardener from curing or initiating curing of the resin until the mass is selectively acted upon in a way causing release of the catalyst/hardener from the inhibiting means.

9. A method according to claim 8, wherein at least some of the said catalyst hardener is contained in absorbent particulate material.

10. A method according to claim 9, wherein the particulate material comprises particulate clay.

11. A method according to claim 10, wherein the clay particles are contained in the matrix in the proportion 30 parts of clay for 100 of the matrix.

12. A method according to any preceding claim, wherein the resin matrix includes an epoxy resin and the catalyst/hardener DETA.

13. A method according to any preceding claim, wherein the matrix includes a thermoplastic resin to improve the extrudability and stability of the matrix.

14. A method according to claim 13, wherein the thermoplastic resin is the phenoxy resin "Paphen".

15. A method according to claim 14, wherein the Paphen is contained in the mixture in the proportion of 10 to 15 parts of Paphen to 100 parts of the base resin.

16. A method according to claim 15, wherein the resin is Shell 828 epoxy resin.

17. A method according to any preceding claims, wherein the resin matrix comprises two types of polyester or two intermixed types of expxy, one of which is in solid or viscous crystalline form and the other of which is in liquid form when they are mixed, and the mixture is heated to soften same, following which the other ingredients of the matrix are added.

18. A method according to any preceding claim, wherein the matrix includes an inorganic filler.

19. A method according to claim 18, wherein the inorganic filler includes glass spheres.

20. A method according to claim 18 or 19, wherein the inorganic filler is contained in the matrix in the proportion of 30 parts of inorganic filler to 100 parts of the remainder of the mixture.

21. A method according to any preceding claim, wherein the matrix includes furfuryl alcohol.

22. A method according to claim 21, wherein the furfuryl alcohol is contained in the matrix in the proportion of 5 parts of the alcohol to 100 parts of the remainder of the matrix.

23. A method according to claim 21 or 22, wherein the furfuryl alcohol is contained in absorbent particles, such as clay particles.

24. The method according to any preceding claim wherein the or each anti-stick layer is a film are applied to one or each surface of the extruded matrix.

25. A method according to claim 24 when taken with claim 1, wherein a protective film is applied to the outside of the lining and said film is biodegradable upon contact with water.

26. A method of producing a sheet or tube comprising producing a lining according to the method of any of claims 1 to 24, in sheet or tube form, and applying protective films to one or both sides of the extrudate.

27. The method according to claim 1 or any preceding claim when dependant upon claim 1, including the step of introducing a plastic tube into the extrudate as extrusion takes place, to form said anti-stick layer.

28. A method according to claim 27, wherein the plastic tube is or includes a netting tube which is of high resistance to stretching in the longitudinal direction, but readily stretchable in circumferential direction.

29. A method according to claim 27 or 28, wherein during extrusion the outer surface of the extrudate is covered by the application of film material thereto.

30. A method according to claim 2 or any preceding claim when dependant upon claim 2, wherein opposite sides of the sheet are covered with films and the films overlap at the edges of the extrudate and at such overlaps the films are sealed together.

31. A method according to claim 29, wherein strips of the films at the edges of the sheet are peeled back to expose the resin matrix and said exposed resin matrix strips are brought face to face and heat bonded to form the lining.

32. A lining for use in lining or forming a pipeline, comprising a tube (22) which is composed mainly of a thermosetting resin matrix layer (12) and is provided with an anti-stick layer on its inner surface so that the lining can be folded and stored which is designed to be cured to a rigid pipe after the structure is placed in position, characterised in that the resin matrix layer (12) is an extrudate of a plastic mass.

## Patentansprüche

1. Verfahren zur Herstellung einer Auskleidung zur Verwendung beim Auskleiden oder Herstellen einer Rohrleitung, gekennzeichnet durch die folgenden Schritte:
a) Strangpressen eines Rohres aus einer Kunststoffmasse, die eine Harzmatrixschicht der Auskleidung bilden soll und hauptsächlich aus einer wärmehartbaren Harzmatrix besteht und die zu einer starten Röhre aushärten soll, nachdem sich die Auskleidung an ihrem Platz befindet;
b) Aufbringen einer Antihaftschicht auf die Innenfläche der Auskleidung,
c) Abflachen der Auskleidung und
d) Falten oder Aufrollen der Auskleidung zum Lagern.

2. Verfahren zur Herstellung einer Auskleidung zur Verwendung beim Auskleiden oder Herstellen einer Pipeline, gekennzeichnet durch die folgenden Schritte:
a) Strangpressen von einem oder mehreren Folie(n) oder Strangpressen von einem oder mehreren Rohr(en) und Schneiden dieses oder dieser zu Folien aus einer Kunststoffmasse, die eine Harzmatrixschicht der Auskleidung bilden soll und hauptsächlich aus einer wärmehärtbaren Harzmatrix besteht und die zu einer starren Röhre aushärten soll, wenn sich die Struktur an ihrem Platz befindet:
b) Verbinden von zwei auf diese Weise hergestellten Folien Kante an Kante, um eine größere Folie zu bilden, und Bringen der größeren Folie in eine Röhrenform;
c) Aufbringen einer Antihaftschicht auf die Innenfläche der Harzmatrixschicht,
d) Abflachen der Auskleidung und
e) Falten oder Aufrollen der Auskleidung zum Lagern.

3. Verfahren nach Anspruch 1 oder 2, bei dem die Harzmatrix einen Faserfüllstoff beinhaltet.

4. Verfahren nach Anspruch 3, bei dem der Faserfüllstoff aus Cellulosefasern besteht.

5. Verfahren nach Anspruch 4, bei dem der Faserfüllstoff aus wiederhergestelltem Zeitungspapier, Jute, Hanf, Flachs, Holzfasern und/oder Stroh besteht.

6. Verfahren nach Anspruch 3, 4 oder 5, bei dem das genannte Fasermaterial in der Matrix in einem Verhältnis von 5 bis 30 Teilen pro 100 Teile des Gemischs enthalten ist.

7. Verfahren nach Anspruch 3, 4, 5 oder 6, bei dem das Fasermaterial trocken in das Eingabeende der Strangpreßvorrichtung geführt und verarbeitet wird, um von dieser kompaktiert zu werden, wenn es sich in Richtung auf eine Preßform der Strangpreßvorrichtung bewegt, und nach einem solchen Kompaktieren, aber vor der Preßform, der Grundharz der Harzmatrix in das kompaktierte Fasermaterial injiziert wird.

8. Verfahren nach einem der vorherigen Ansprüche, bei dem die Matrix einen Katalysator/Härter umfäßt und bei dem der Katalysator/Harter in einem Verzögerungsmittel enthalten ist, das den Katalysator/Härter am Härten oder Einleiten des Härtens des Harzes hindert, bis auf die Masse selektiv in einer Weise eingewirkt wird, die zur Freigabe des Katalysators/Härters aus dem Verzögerungsmittel führt.

9. Verfahren nach Anspruch 8, bei dem wenigstens ein Teil des genannten Katalysators/Härters in absorptionsfähigem Partikelmaterial enthalten ist.

10. Verfahren nach Anspruch 9, bei dem das Partikelmaterial aus partikulärem Ton besteht.

11. Verfahren nach Anspruch 10, bei dem die Tonpartikel in der Matrix in einem Verhältnis von 30 Teilen Ton zu 100 Teilen der Matrix enthalten sind.

12. Verfahren nach einem der vorherigen Ansprüche, bei dem die Harzmatrix einen Epoxidharz und den Kataysator/Härter DETA beinhaltet.

13. Verfahren nach einem der vorherigen Ansprüche, bei dem die Matrix einen thermoplastischen Harz enthält, um die Strangpreßbarkeit und Stabilität der Matrix zu verbessern.

14. Verfahren nach Anspruch 13, bei dem der thermoplastische Harz der Phenoxyharz "Paphen" ist.

15. Verfahren nach Anspruch 14, bei dem Paphen in dem Gemisch in einem Verhältnis von 10 bis 15 Teilen Paphen zu 100 Teilen des Grundharzes enthalten ist.

16. Verfahren nach Anspruch 15, bei dem der Harz Epoxidharz Shell 828 ist.

17. Verfahren nach einem der vorherigen Ansprüche, bei dem die Harzmatrix zwei Arten von Polyester oder zwei vermischte Arten von Epoxidharz umfäßt, von denen eine eine feste oder viskose kristalline Form und die andere eine flüssige Form aufweist, wenn sie vermischt werden, und das Gemisch zum Erweichen erwärmt wird, wonach die anderen Inhaltsstoffe der Matrix hinzugefügt werden.

18. Verfahren nach einem der vorherigen Ansprüche, bei dem die Matrix einen anorganischen Füllstoff beinhaltet.

19. Verfahren nach Anspruch 18, bei dem der anorganische Füllstoff Glaskugeln enthält.

20. Verfahren nach Anspruch 18 oder 19, bei dem der anorganische Füllstoff in der Matrix in einem Verhältnis von 30 Teilen anorganischer Füllstoff zu 100 Teilen des restlichen Bestandteils des Gemischs enthalten ist.

21. Verfahren nach einem der vorherigen Ansprüche, bei dem die Matrix Furfurylalkohol enthält.

22. Verfahren nach Anspruch 21, bei dem der Furfurylalkohol in der Matrix in einem Verhältnis von 5 Teilen Alkohol zu 100 Teilen des restlichen Bestandteils der Matrix enthalten ist.

23. Verfahren nach Anspruch 21 oder 22, bei dem der Furfurylalkohol in absorptionsfähigen Partikeln wie Tonpartikel enthalten ist.

24. Verfahren nach einem der vorherigen Ansprüche, bei dem die oder jede Antihaftschicht ein Film ist, der auf eine oder jede Fläche der stranggepreßten Matrix aufgetragen wird.

25. Verfahren nach Anspruch 24, in Abhängigkeit von Anspruch 1, bei dem ein Schutzfilm auf die Außenseite der Auskleidung aufgetragen wird, wobei der genannte Film bei Kontakt mit Wasser biologisch abbaubar ist.

26. Verfahren zur Herstellung einer Folie oder eines Rohres, umfassend die folgenden Schritte: Herstellen einer Auskleidung gemäß dem Verfahren nach einem der Ansprüche 1 bis 24, in Folien- oder Rohrform und Auftragen von Schutzfilmen auf eine oder beide Seite des Strangpreßerzeugnisses.

27. Verfahren nach Anspruch 1 oder einem der vorherigen Ansprüche, in Abhängigkeit von Anspruch 1, umfassend das Einführen eines Kunststoffrohres in das Strangpreßerzeugnis, während der Strangpreßvorgang stattfindet, um die genannte Antihaftschicht zu bilden.

28. Verfahren nach Anspruch 27, bei dem das Kunststoffrohr ein Netzgeweberohr ist oder enthält, das gegenüber einer Ausdehnung in Längsrichtung überaus beständig ist, aber in Umfangsrichtung problemlos dehnbar ist.

29. Verfahren nach Anspruch 27 oder 28, bei dem die Außenfläche des Strangpreßerzeugnisses während des Strangpreßvorgangs durch Auftragen von Filmmaterial darauf abgedeckt wird.

30. Verfahren nach Anspruch 2 oder einem der vorherigen Ansprüche, in Abhängigkeit von Anspruch 2, bei dem gegenüberliegende Seiten der Folie mit Filmen überzogen werden, wobei sich die Filme an den Kanten des Strangpreßerzeugnisses überlappen und die Filme an solchen Überlappungen zusammen versiegelt werden.

31. Verfahren nach Anspruch 29, bei dem Streifen des Films an den Kanten der Folie abgezogen werden, um die Harzmatrix freizulegen, und die genannten freigelegten Harzmatrixstreifen aufeinandergelegt und wärmeverbunden werden, um die Auskleidung herzustellen.

32. Auskleidung zur Verwendung beim Auskleiden oder Herstellen einer Rohrleitung, umfassend ein Rohr (22), das hauptsächlich aus einer hitzehärtbaren Harzmatrixschicht (12) besteht und mit einer Antihaftschicht auf seiner Innenfläche versehen ist, so daß die Auskleidung gefaltet und gelagert werden kann, die zu einer starren Röhre aushärten soll, nachdem sich die Struktur an ihrem Platz befindet, dadurch gekennzeichnet, daß die Harzmatrixschicht (12) ein Strangpreßerzeugnis aus einer Kunststoffmasse ist.

## Revendications

1. Un procédé de fabrication d'un revêtement destiné à être utilisé pour le garnissage ou le formage d'une tuyauterie, caractérisé par les étapes consistant a :
a) extruder un tube en matière plastique qui est censée former la couche a matrice de résine du revêtement, et est principalement composée d'une matrice de résine thermodurcissable, et qui est conçu pour être durci afin de devenir une tubulure rigide une fois que le revêtement est placé en position,
b) offrir une couche anti-adhésive sur la surface interne du revêtement,
c) aplanir le revêtement ; et
d) le plier ou l'enrouler en vue de son entreposage.

2. Un procédé de fabrication d'un revêtement destiné à être utilisé pour le garnissage ou le formage d'une tuyauterie, caractérisé par les étapes consistant à :
a) extruder une feuille, ou plusieurs feuilles, ou extruder un tube, ou plusieurs tubes, et le (les) couper en feuilles de matière plastique qui est censée former la couche à matrice de résine du revêtement, et est principalement composée d'une matrice de résine thermodurcissable, et qui est conçu pour être durci afin de devenir une tubulure rigide une fois que la structure est placée en position,
b) réunir deux des feuilles ainsi produites, bord à bord, afin de constituer une feuille plus grande, et façonner la feuille plus grande en une forme tubulaire,
c) offrir une couche anti-adhésive sur la surface interne de la couche à matrice de résine,
d) aplanir le revêtement ; et
e) le plier ou l'enrouler en vue de son entreposage.

3. Un procédé, selon les stipulations de la revendication 1 ou 2, dans lequel la matrice de résine contient une charge fibreuse.

4. Un procédé, selon les stipulations de la revendication 3, dans lequel la charge fibreuse est composée de fibres cellulosiques.

5. Un procédé, selon les stipulations de la revendication dans lequel la charge fibreuse est composée de papier journal reconstitué, de jute, de chanvre, de lin, de fibres de bois et/ou de paille.

6. Un procédé, selon les stipulations de la revendication 3, 4 ou 5, dans lequel le matériau fibreux est contenu dans la matrice selon une proportion variant entre 5 et 30 parts par 100 parts du mélange.

7. Un procédé, selon les stipulations de la revendication 3, 4, 5 ou 6, dans lequel le matériau fibreux est introduit dans le côté alimentation de l'appareil d'extrusion à sec, et est traité en vue d'être compacté par celui-ci au fur et à mesure qu'il se déplace vers une filière de l'appareil d'extrusion, et après l'opération de compactage, mais avant de passer dans la filière, la résine de base de la matrice de résine est injectée dans le matériau fibreux compacté.

8. Un procédé, selon les stipulations de l'une quelconque des revendications précédentes, dans lequel la matrice inclut un catalyseur/durcisseur et dans lequel le catalyseur/durcisseur est contenu dans un moyen d'inhibition empêchant le catalyseur/durcisseur de durcir la résine, ou d'amorcer le durcissage de la résine, tant que la masse n'a pas été soumise a une action sélective de façon a provoquer le dégagement du catalyseur/du durcisseur hors du moyen d'inhibition.

9. Un procédé, selon les stipulations de la revendication 8, dans lequel une certaine quantité au moins dudit catalyseur/durcisseur est contenu dans un matériau particulaire absorbant.

10. Un procédé, selon les stipulations de la revendication 9, dans lequel le matériau a particules est composé d'argile particulaire.

11. Un procédé, selon les stipulations de la revendication 10, dans lequel les particules d'argile sont contenues dans la matrice selon une proportion de 30 parts d'argile pour 100 parts de la matrice.

12. Un procédé, selon les stipulations de l'une quelconque des revendications précédentes, dans lequel la matrice de résine inclut une résine époxyde et le catalyseur/durcisseur DETA.

13. Un procédé, selon les stipulations de l'une quelconque des revendications précédentes, dans lequel la matrice inclut une résine thermoplastique dans le but d'améliorer l'extrudabilité et la stabilité de la matrice.

14. Un procédé, selon les stipulations de la revendication 13, dans lequel la résine thermoplastique est composée de la résine phénoxyde "Paphen".

15. Un procédé, selon les stipulations de la revendication 14, dans lequel la résine Paphen est contenue dans le mélange selon une proportion variant entre 10 et 15 parts de Paphen pour 100 parts de résine de base.

16. Un procédé, selon les stipulations de la revendication 15, dans lequel la résine est composée de la résine époxyde Shell 828.

17. Un procédé, selon les stipulations de l'une quelconque des revendications précédentes, dans lequel la matrice de résine comprend deux types de polyester ou deux types de résine époxyde mélangés entre eux, dont l'un se présente sous forme solide ou sous forme cristalline visqueuse, alors que l'autre se présente sous forme liquide quand ils sont mélangés, et le mélange est chauffé en vue de leur ramollissement, après quoi les autres ingrédients de la matrice sont ajoutés.

18. Un procédé, selon les stipulations de l'une quelconque des revendications précédentes, dans lequel la matrice inclut une charge inorganique.

19. Un procédé, selon les stipulations de la revendication 18, dans lequel la charge inorganique inclut des billes de verre.

20. Un procédé, selon les stipulations de la revendication 18 ou 19, dans lequel la charge inorganique est contenue dans la matrice selon une proportion de 30 parts de charge inorganique pour 100 parts du reste du mélange.

21. Un procédé, selon les stipulations de l'une quelconque des revendications précédentes, dans lequel la matrice inclut de l'alcool furfurylique.

22. Un procédé, selon les stipulations de la revendication 21, dans lequel l'alcool furfurylique est contenu dans la matrice selon une proportion de 5 parts d'alcool pour 100 parts du reste du mélange.

23. Un procédé, selon les stipulations de la revendication 21 ou 22, dans lequel l'alcool furfurylique est contenu dans des particules absorbantes, telles que des particules d'argile.

24. Le procédé, selon les stipulations de l'une quelconque des revendications précédentes, dans lequel la couche anti-adhésive, ou chaque couche anti-adhésive, est une pellicule qui est appliquée sur une surface, ou sur chaque surface, de la matrice extrudée.

25. Un procédé, selon les stipulations de la revendication 24, lorsqu'elle est réalisée en conjonction avec la revendication 1, dans lequel une pellicule protectrice est appliquée sur la face externe du revêtement et ladite pellicule est biodégradable au moment où elle entre en contact avec l'eau.

26. Un procédé de production d'une feuille ou d'un tube, comprenant la production d'un revêtement conformément au procédé énoncé dans l'une quelconque des revendications 1 à. 24, sous forme de feuille ou de tube, et l'application de pellicules protectrices sur l'une des faces, ou sur les deux faces, du produit extrudé.

27. Le procédé selon les stipulations de la revendication 1, ou l'une quelconque des revendications précédentes lorsqu'elle est subordonnée à la revendication 1, incluant l'étape consistant à introduire un tube plastique dans le produit extrudé lorsque l'extrusion a lieu, afin de constituer ladite couche anti-adhésive.

28. Un procédé, selon les stipulations de la revendication 27, dans lequel le tube plastique est un tube à filet maillé, ou inclut un tube à filet maillé, qui présente une résistance élevée à l'allongement dans le sens longitudinal, mais qui est facilement étirable dans le sens circonférentiel.

29. Un procédé, selon les stipulations de la revendication 27 ou 28, dans lequel pendant l'extrusion la surface externe du produit extrudé est couverte par l'application sur celle-ci du matériau pelliculaire.

30. Un procédé, selon les stipulations de la revendication 2 ou l'une quelconque des revendications précédentes, lorsqu'elle est subordonnée à la revendication 2, dans lequel les bords opposés de la feuille sont couverts de pellicules, et les pellicules se chevauchent sur les bords du produit extrudé, et les pellicules sont scellées ensemble au niveau de tels chevauchements.

31. Un procédé, selon les stipulations de la revendication 29, dans lequel des bandes de pellicule, au niveau des bords de la feuille, sont arrachées et rabattues en arrière afin d'exposer la matrice de résine, et lesdites bandes exposées de la matrice de résine sont amenées face à face et sont liaisonnées thermiquement afin de constituer le revêtement.

32. Un revêtement destiné à être utilisé dans le garnissage ou le formage d'une tuyauterie, comprenant un tube (22) qui est essentiellement composé d'une couche à matrice de résine thermodurcissable (12) et qui est muni d'une couche anti-adhésive sur sa face interne de façon à ce que le revêtement puisse être plié et rangé, qui a été conçu pour être durci pour devenir une tubulure rigide une fois que la structure est placée en position, caractérisé en ce que la couche à matrice de résine (12) est un produit extrudé en matière plastique.
